# EUROPEAN PATENT APPLICATION

(11) **EP 2 993 923 A1**
(43) Date of publication of application: **09.03.2016**
(21) Application number: 14306355.0
(22) Date of filing: 03.09.2014
(51) Int. Cl.: H04W 4/06, H04W 36/00, H04W 76/04

(54) **Service continuity support in a cellular network**

(71) Applicant: ALCATEL LUCENT, 92100 Boulogne-Billancourt (FR)
(72) Inventor: Worrall, Chandrika, Swindon, WI SN5 7DJ (GB)
(74) Representative: Huber, Meik

(57) **Abstract**

The present invention relates to a method for receiving data in a cellular network and a user equipment device performing the method. The present invention relates to a method for forwarding received data and a user equipment device performing the method.

## Description

### FIELD OF THE INVENTION

The present invention relates to a method for receiving data in a cellular network and to a user equipment device performing the method and to a method for forwarding received data and to a user equipment device performing the method.

### BACKGROUND OF THE INVENTION

This section introduces aspects that may be helpful in facilitating a better understanding of the invention. Accordingly, the statements of this section are to be read in this light and are not to be understood as admission about what is in the prior art.

3GPP has worked on providing multimedia broadcast multicast service (MBMS), also referred to eMBMS in LTE. Service continuity is an objective providing many problems and work has been done especially related to enabling the user equipment to move if the service is provided via MBMS.

If the service is not available over MBMS or the delivery over MBMS is stopped by the network, the user equipment may request the service to be provided over unicast in case the service is also available as unicast service.

This does not provide a solution for scenarios in which the user equipment has moved into an out of network coverage area. When the user equipment has moved into an out of coverage area, the unicast service is also not available. For example, the user equipment may move into a basement of a building where radio reception is not available while receiving a service over MBMS. In this case, the MBMS connection will fail and a request of the same service as unicast service will not be successful.

When MBMS is used for applications, it is an important requirement that service is available for a user equipment, even if the user equipment has moved in an out of coverage area.

### SUMMARY OF THE INVENTION

It is an object of the invention to provide a solution to the above mentioned problem.

The present invention concerns a method for receiving data in a cellular network which is performed e.g. by a user equipment. The user equipment receives data in a cellular network via a multicast transmission. The user equipment detects its own movement in an out of coverage area of the cellular network. Detecting movement in an out of coverage area means detecting any loss of connection to the base station which has the consequence that the multicast transmission cannot further be received. The connection may also be lost e.g. if a big obstacle like a truck approaches the user equipment and as a consequence, an out of coverage area is build at the place where the user equipment is located. Movement in an out of coverage area may be detected either if loss of connection is detected for a certain time, or if signal quality and bandwidth declines, etc. If the user equipment detects its own movement into an out of coverage area, the user equipment requests out of coverage communication. In device-to-device communication, the user equipment is aware of the resources available for out of coverage communication. The request for out of coverage communication is either a coordinated or uncoordinated request according to the device-to-device communication scheme. An example for a message carrying a service request is described below. Then, the user equipment receives data which are forwarded via device-to-device transmission. The data forwarded are the data of the multicast transmission, which are received by other devices e.g. user equipments nearby and are forwarded according to a device-to-device transmission scheme. This has the advantage that multicast transmissions are maintained, even if a user equipment moves to an out of coverage area or somehow looses connection to the base station. Especially, for safety applications, this is mandatory. But also for other broadcast or multicast applications, e.g. like TV over LTE, the user expects that the service is available everywhere. User experience is enhanced if the services are also available in out of coverage areas.

According to one embodiment, for requesting out of coverage communication a "service request message" is sent. The service request message includes at least one of the group which the user equipment belongs to, the service information, the service ID, an indication that the user equipment is out of coverage and the point of time from which on the service was unavailable.

According to one embodiment, the device-to-device transmission is a multicast transmission. In one embodiment, the device forwarding the data and performing the device-to-device transmission is just relaying the multicast data. In one embodiment, the device forwarding the data and performing the device-to-device transmission has some signal processing capability implemented and the multicast data is processed and then forwarded as multicast transmission.

According to one embodiment, the device-to-device transmission is a unicast transmission.

According to one embodiment, the multicast transmission is an MBMS or eMBMS transmission. Thus, in this embodiment, the method is integrated into e.g. an UMTS or LTE or further advanced 4G or 5G cellular network.

According to one embodiment, the step of requesting out of coverage communication consists of checking if information about out of coverage communication is already available. If information about out of coverage communication is already available, this information is used for performing the receiving step. Information about out of coverage communication means information which is required for receiving the already forwarded data via device-to-device transmission by a receiving device, i.e. information necessary at a receiving device to receive an already available device-to-device multicast stream. E.g. if a request for out of coverage communication was made by a user equipment which was out of coverage, and this request was satisfied by a user equipment device still in a coverage area by a multicast device-to-device transmission, another user equipment can receive the same multicast device-to-device transmission without sending another out of coverage communication request. This has the advantage that, e.g. in cases where multiple user equipments move out of coverage, signaling overhead is reduced.

According to one embodiment, a method for forwarding received data in a cellular network is proposed. Data in the cellular network is received via multicast or unicast transmission by a device performing the method for forwarding received data, e.g. a user equipment capable for device-to-device transmission. An out of coverage communication request is received. The out of coverage request origins e.g. from a device which has lately moved in an out of coverage area. The received out of coverage request is satisfied by the device performing the method by forwarding the received data via device-to-device transmission to at least the device from which the out of coverage request originates.

According to one embodiment, the out of coverage communication request which is received comprises at least a service request message. The service request message includes at least one of the group which the user equipment belongs to, the service information, the service ID, an indication that the user equipment is out of coverage and the point of time from which on the service was unavailable.

According to one embodiment, the method for forwarding received data further comprises checking if at least one other device satisfies the out of coverage request. In one embodiment, checking is performed by receiving data forwarded via device-to-device transmission by a neighbouring device. In one embodiment, checking is performed by requesting information from a database of the network which provides device-to-device forwarding information. If no other device satisfies the out of coverage request, the received data is forwarded via device-to-device transmission.

According to one embodiment, the method for forwarding received data further comprises the step informing other devices that data are forwarded and the out of coverage request is satisfied.

According to one embodiment, the device-to-device transmission in the method for forwarding received data is a multicast transmission. According to one embodiment, the multicast transmission is a MBMS transmission.

According to one embodiment, the device-to-device transmission in the method for forwarding received data is a unicast transmission.

According to one embodiment, a user equipment device for receiving data in a cellular network is proposed. The user equipment comprises a receiver for receiving data in the cellular network via multicast transmission. The user equipment further comprises a movement detector for detecting movement into an out of coverage area of the cellular network. Detecting movement in an out of coverage area means detecting any loss of connection to the base station which has the consequence that the multicast transmission cannot further be received. The connection may also be lost e.g. if a big obstacle like a truck approaches the user equipment and as a consequence, an out of coverage area is bulid at the place where the user equipment is located. The user equipment further comprises a sender for requesting out of coverage communication. The user equipment further comprises a device-to-device transmission receiver which is adapted for receiving data which are forwarded via device-to-device transmission. The data forwarded via device-to-device transmission are forwarded by a device-to-device transmission device nearby upon the request of out of coverage communication or are already forwarded by the device-to-device transmission device before the request for out of coverage communication was sent.

According to one embodiment, the user equipment for receiving data in a cellular network is adapted to perform the methods for receiving data as described above. According to one embodiment, the user equipment further comprises means for checking if out of cover communication is already available and providing this information to the device-to-device transmission receiver. The device-to-device transmission receiver is adapted to receive such already available device-to-device transmission.

According to one embodiment, a user equipment for forwarding data in a cellular network is proposed. The user equipment device comprises a receiver for receiving data in the cellular network via multicast. The user equipment also comprises a receiver for receiving an out of coverage communication request. The receiver for receiving the out of coverage communication request may be integrated in the receiver for receiving data or may be a separate receiver. The user equipment further comprises a device-to-device transmitter for forwarding data which was received via the multicast data receiver via device-to-device communication. The device-to-device transmitter may forward the receiver data via unicast or multicast.

According to one embodiment, the user equipment for forwarding data in a cellular network is adapted to perform the methods for forwarding received data as described above.

Further advantageous features of the embodiments of the invention are defined and are described in the following detailed description.

### BRIEF DESCRIPTION OF THE DRAWINGS

Some embodiments of apparatus and methods in accordance with embodiments of the present invention are now described, by way of examples only, and with reference to the accompanying drawings, in which:
- Fig. 1: schematically depicts a cellular network
- Fig. 2: schematically depicts signaling according to one embodiment of the invention
- Fig. 3: schematically depicts signaling according to one embodiment of the invention
- Fig. 4: shows a method for receiving data according one embodiment of the invention performed in a receiver
- Fig. 5: shows a method for forwarding data according to one embodiment of the invention performed in a user equipment

### DETAILED DESCRIPTION OF PREFERRED EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

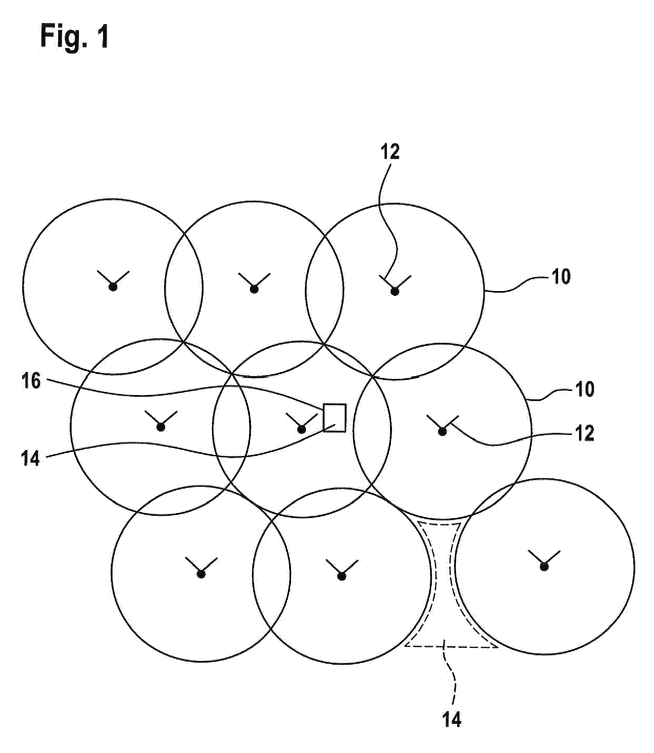

Fig. 1 shows a cellular network for providing data to user equipments. The cellular network comprises network cells 10 which provide network coverage and some areas 14 where no network coverage is available. A network cell 10 comprises at least one base station 12 which provides data via a wireless link to user equipment devices within the network cell 10 and receives data via a wireless link from user equipments within the network cell 10. The areas 14 where no network coverage is available are cells which do not provided network coverage or are areas 14 in a cell which do provide network coverage in principle, but due to environmental facts like walls, obstacles 16 etc. data reception in certain areas 14 in this cell 10 is not possible. Also in areas 14 between network cells 10 no network coverage may be available. When stating that in an area 14 network coverage is not provided (out of coverage area 14), it is meant e.g. that no reception of signals from a base station 12 is possible at all and no sending to the base station 12 is possible. Network coverage not provided does also include that signal reception is possible in principle, but a certain service e.g. Multimedia Broadcast Multicast Service (MBMS) is not provided in an out of coverage area 14. This might also mean that signal strength and/or data rate are that low that some services are still provided in this areas 14 but a certain service, e.g. MBMS is not provided in this area 14.

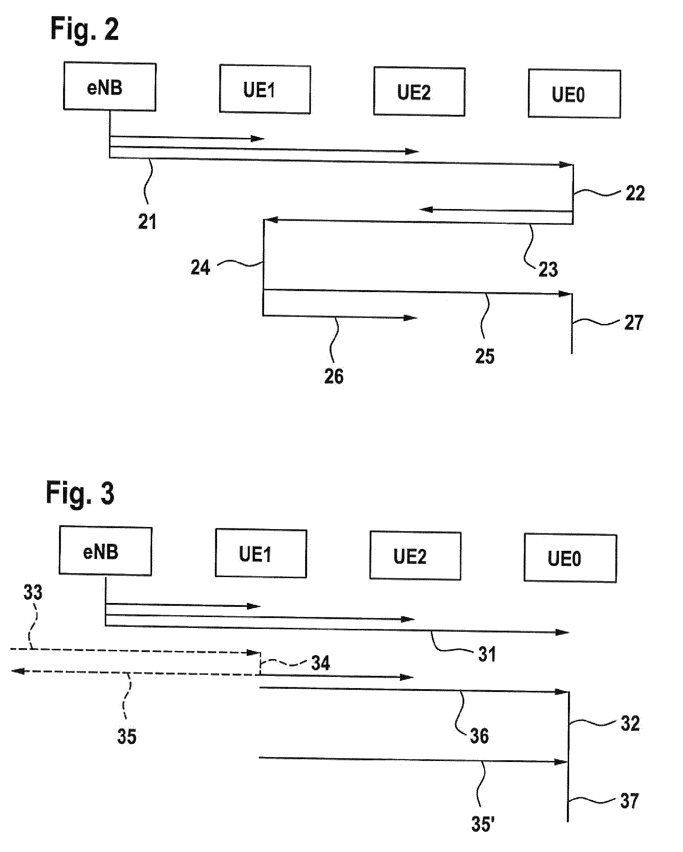

Fig. 2 depicts a scenario according to one embodiment of the invention. Signaling in a cellular network with regard to steps of the invention is shown. Only signaling steps which are necessary to understand the principle of the invention are depicted and described. The overall signaling in a cellular network is much more complex and is not described in every detail herein. It is assumed that the scenario comprises an eNodeB eNB and three user equipments UE0, UE1, UE2 to describe the mechanism of the inventions schematically. In reality, a certain number of eNodeBs which correspond to network cells 10 and a certain number of user equipments are available. The eNodeB eNB provides 21 broadcast data via Multimedia Broadcast Multicast Service (MBMS) to user equipments UE0, UE1, UE2 in its coverage area. If a user equipment UE0 moves 22 out of the coverage area of the eNodeB eNB and is also not covered by another eNodeB, the user equipment detects moving in an out of coverage area 14 and requests 23 out of coverage communication. In one embodiment, special out of coverage signaling schemes are provided. In one embodiment, the out of coverage request 23 is sent via the available signaling mechanisms of the cellular network, e.g. of an LTE network as known in the art. This request 23 is sent to other user equipments UE1, UE2 nearby. In one embodiment, the out of coverage communication request 23 is sent to all user equipments UE1, UE2 nearby (broadcast). In one embodiment, the out of coverage communication request 23 is sent only to one or a few specific user equipments UE1, UE2 nearby (unicast). In one embodiment, the out of coverage communication request 23 is sent only to user equipments UE1, UE2 which are capable to device-to-device transmission. In one embodiment, the out of coverage communication request 23 is sent only to user equipments UE1, UE2 which are located in coverage of the eNodeB eNB but at the border to the out of coverage area 14 from which the out of coverage communication request 23 originates. In one embodiment, a service request message is used for sending the out of coverage communication request 23. The service request message is an RRC message following the device-to-device message structure. In one embodiment, the service request message is a lower layer message (RLC/MAC or PDCP) following the device-to-device message structure. The service request message provides information such as the group which the user equipment belongs to, the service information, the service ID, an indication that the user equipment is out of coverage and also the point of time from which on the service was unavailable. The time when the service was unavailable is provided to avoid service interruption at the user equipment which moves out of the coverage while receiving the service. According to one embodiment, the group which the UE belong to is provided in terms of group ID, temporary mobile group identity (TMGI) of the service which was received or RAN level ID which is used for out of coverage or partial coverage device-to-device transmission. The service information is derived based on the service ID which was received, the TMGI used for MBMS transmission or application layer service identification, etc. If a user equipment UE1 receiving the out of coverage communication request 23 decides to satisfy 24 the request 23, it relays 25 the data to be forwarded to the user equipment UE0 which has sent the request 23 either by a multicast transmission or a unicast transmission. The user equipment UE0 which has sent the request receives 27 the data relayed by device-to-device transmission.

As the out of coverage communication request 23 is sent as one to many, it is possible that more than one user equipment UE1, UE2 receives the out of coverage communication request 23 and the corresponding service request message. Thus, in one embodiment, the user equipment UE1 satisfying the request informs 26 other user equipment UE2 nearby, which might also have received the out of coverage communication request 23 that the request is satisfied and that they do not need to response to such an out of coverage communication request 23. This prevents multiple replies to the out of coverage communication request 23 from multiple user equipments and prevents network overload. In one embodiment, the user equipment UE1 which wants to relay the data is required to gain permission from the network, e.g. the eNodeB eNB, for transmitting in out of coverage mode. Two modes of communication are defined in device-to-device transmission in 3GPP. Model is used for in coverage communication while Mode2 is used for out of coverage communication. In some scenarios, Mode2 can also be used for in coverage communication. Thus, the network configures the user equipment UE0, UE1, UE2 for Mode2 transmission while they are still in network coverage. According to one embodiment, permission for Mode2 transmission for the user equipment UE1 which wants to relay the data is requested from the eNodeB eNB by stating the reason for the request. The user equipment UE1 listens to the scheduling assignment channel used for out of coverage communication, on which receives the service request of the out of coverage user equipment UE0.

In one embodiment, prior to the start of relaying 25 of the data, the user equipment UE1 which wants to forward the received data transmits an indication to the out of coverage user equipment UE0 that it will forward the data. If the user equipment UE0 which has sent the out of coverage communication request 23 acknowledges, the user equipment UE1 forwards the data. This prevents duplicate answers from different user equipments UE1, UE2 to one out of coverage communication request 23. In one embodiment, the eNodeB eNB is informed about the out of coverage communication request 23 and the fact that a user equipment UE1 satisfies this request 23, and the eNodeB eNB stores this information in a database and informs user equipments UE0, UE1 UE2 which might be interested in this information and provides this information to user equipment UE0, UE1, UE2 which request information about out of coverage communication which is ongoing. In one embodiment, the eNodeB eNB grants permission to satisfy an out of coverage communication request 23 to a user equipment UE1 which want to forward data. The data is not forwarded until the permission is granted. In one embodiment, a duplicate detection mechanism is applied. Even if tried to avoid duplicate transmission of the same content as described above, some user equipment may still receive multiple copies of the service. This is the case e.g. if a user equipment UE0 is close to the border of the out of coverage area 14 and still receives the in coverage signal via MBMS, but at the same time receives the out of coverage communication data. This is the case e.g. if out of coverage communication was requested before, and then the user equipment moves back closer to the border of the in coverage area. In one embodiment, the duplicate detection is based on the service ID such as TMGI. Upon detection of the duplicate TMGIs, the user equipment UE0 does not decode the service over the out of coverage transmission. In one embodiment, the duplicate detection is based on the application layer service ID. The application layer performs the duplicate detection and avoidance.

Fig. 3 depicts a scenario according to one embodiment of the invention. Signaling in a cellular network with regard to steps of the invention is shown. Only signaling steps which are necessary to understand the principle of the invention are depicted and described. The overall signaling in a cellular network is much more complex and is not described in every detail herein. It is assumed that the scenario comprises an eNodeB eNB and three user equipments UE0, UE1, UE2 to describe the mechanism of the inventions schematically. In reality, a certain number of eNodeBs which correspond to network cells and a certain number of user equipments are available. The eNodeB eNB provides 31 broadcast data via Multimedia Broadcast Multicast Service (MBMS) to user equipments UE0, UE1, UE2 in its coverage area. One user equipment UE0 is in the proximity of the out of coverage area 14. Assuming that out of coverage communication already takes place, e.g. because another user equipment had requested 33 out of coverage communication before, and a user equipment UE1 had decided 34 to satisfy the request and is relaying 35 data. In response to relaying 35 data, the user equipment UE1 has already informed 36 other user equipments that it is relaying 35 data. The user equipment UE0 at the border to the out of coverage area 14 detects duplicate transmission of the data, via normal MBMS communication in coverage as well as via out of coverage communication. When the user equipment UE0 detects 32 movement into an out of coverage area 14, the user equipment UE0 already has knowledge that the same service is delivered 35' via out of coverage communication, which can also be received by the user equipment UE0. Therefore, the user equipment UE0 does not send an out of coverage communication request. The user equipment UE0 receives 37 the out of coverage communication which already takes place. In one embodiment, the user equipment UE1 forwarding the data is informed that the user equipment UE0 now also receives 37 the out of coverage communication. In one embodiment, the eNodeB eNB is informed that the user equipment UE0 now also receives 37 the out of coverage communication.

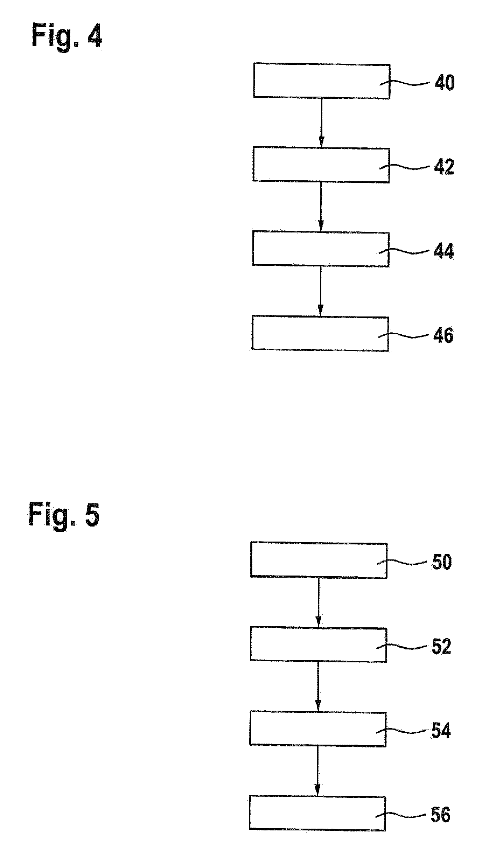

Fig. 4 shows a method for receiving data performed in a receiver according to the invention. In step 40, the receiver receives data via multicast in a cellular network. In e.g. LTE, this data is broadcast by the network via MBMS and received by the receiver. The receiver is implemented in a user equipment, which is e.g. a mobile terminal, telephone, laptop or the like. The user equipment may move around, and thus may come to the proximity of an out of coverage area 14. The user equipment detects in step 42 the movement into an out of coverage area 14 of the network. Detecting movement in an out of coverage area 14 means detecting any loss of connection to the base station 12 which has the consequence that the multicast transmission cannot further be received. The connection may also be lost e.g. if a big obstacle 16 like a truck approaches the user equipment and as a consequence, an out of coverage area 14 is build at the place where the user equipment is located. Movement in an out of coverage area 14 may only be detected if loss of connection is detected for a certain time, or if signal quality and bandwidth declines, etc. In step 44, the user equipment request out of coverage communication. In one embodiment, the user equipment checks in step 44 if out of coverage communication is already available, e.g. because out of coverage communication was requested by another user equipment and data are already forwarded by a user equipment via device-to-device transmission.

If out of coverage communication is already available, no separate request for out of coverage communication is sent. In step 46, the user equipment receives data which is forwarded by another user equipment via device-to-device transmission in response to receiving the request sent in step 44. If in step 44 it is discovered that out of coverage communication is already available, the user equipment receives the data which are already forwarded. In one embodiment, the user equipment UE0 which receives out of coverage communication informs the user equipment UE1 forwarding the data via device-to-device transmission if it gets back into a network coverage area. The user equipment UE1 can then stop forwarding data to omit unnecessary network traffic.

Fig. 5 shows a method for forwarding received data in a cellular network. In step 50, a user equipment in a cellular network performing the method receives data via multicast. In step 52, the user equipment UE1 receives an out of coverage communication request from another user equipment UE0. The other user equipment UE0 is likely in an out of coverage area 14 and in addition is in the proximity of the user equipment UE1 receiving the out of coverage communication request. Being in the proximity of the user equipment UE1 receiving the out of coverage communication request means at least that it is so close that data can be forwarded via device-to-device transmission and such data can be received by the user equipment UE0. In step 54, the user equipment UE1 performing the method forwards received multicast data via device-to-device transmission. In one embodiment, step 54 includes checking if the out of coverage communication request is already satisfied by another user equipment and forwarding the received multicast data only if the out of coverage communication request is not already satisfied. In step 56, the user equipment UE1 informs other user equipments in the proximity that it satisfies the out of coverage request, such that these user equipments benefit from this information and do not need to satisfy similar requests they may receive.

The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the functions may be provided, without limitation, by digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method for receiving data in a cellular network, comprising the steps:
- receiving (40) data in the cellular network via multicast transmission,
- detecting (42) movement into an out of coverage area (14) of the cellular network,
- requesting (44) out of coverage communication, and
- receiving (46) data which are forwarded via device-to-device transmission.

2. Method for receiving data in a cellular network according to claim 1, wherein the step of requesting out of coverage communication comprises sending a service request message which includes at least one of the group which the user equipment belongs to, the service information, the service ID, an indication that the user equipment is out of coverage and the point of time from which on the service was unavailable.

3. Method for receiving data in a cellular network according to claim 1, wherein the device-to-device transmission is a multicast transmission or a unicast transmission.

4. Method for receiving data in a cellular network according to one of claims 1 to 3, wherein the multicast transmission is a MBMS or eMBMS transmission.

5. Method for receiving data in a cellular network according to one of claims 1 to 4, wherein the step of requesting out of coverage communication consists of checking if information about out of coverage communication is already available and if information about out of coverage communication is already available using this information for performing the receiving step.

6. Method for forwarding received data in a cellular network, comprising the steps:
- receiving (50) data in the cellular network via multicast,
- receiving (52) an out of coverage communication request, and
- forwarding (54) received data via device-to-device transmission.

7. Method for receiving data in a cellular network according to claim 6, wherein the step of receiving an out of coverage communication request comprises receiving a service request message which includes at least one of the group which the user equipment belongs to, the service information, the service ID, an indication that the user equipment is out of coverage and the point of time from which on the service was unavailable.

8. Method for forwarding received data in a cellular network according to one of claims 6 or 7, further comprising the steps:
- checking if at least one other device satisfies the out of coverage request, and
- if no other device satisfies the out of coverage request, forwarding received data via device-to-device transmission.

9. Method for forwarding received data in a cellular network according to one of claims 6 to 8, further comprising the steps:
- informing (56) other devices that data are forwarded.

10. Method for forwarding received data in a cellular network according to one of claims 6 or 9, wherein the device-to-device transmission is a multicast transmission or a unicast transmission.

11. Method for forwarding received data in a cellular network according to one of claims 6 or 10, wherein the multicast transmission is a MBMS or eMBMS transmission.

12. User equipment device for receiving data in a cellular network, comprising:
- a receiver for receiving data in the cellular network via multicast transmission,
- a movement detector for detecting movement into an out of coverage area of the cellular network,
- a sender for requesting out of coverage communication, and
- a device-to-device transmission receiver adapted for receiving data which are forwarded via device-to-device transmission.

13. User equipment device according to claim 12, wherein the user equipment device is adapted for performing a method according to one of claims 1 to 5.

14. User equipment device for forwarding received data in a cellular network, comprising:
- a receiver for receiving data in the cellular network via multicast,
- a receiver for receiving an out of coverage communication request, and
- a device-to-device transmission sender for forwarding received multicast data via device-to-device transmission.

15. User equipment device according to claim 14, wherein the user equipment device is adapted for performing a method according to one of claims 6 to 11.
